# EUROPEAN PATENT APPLICATION

(11) **EP 4 660 855 A1**
(43) Date of publication of application: **10.12.2025**
(21) Application number: 24305895.5
(22) Date of filing: 06.06.2024
(51) Int. Cl.: G06F 21/54, G06F 21/55, G06F 21/56, G06F 21/71, G06F 9/30

(54) **DETECTION OF A FAULT INJECTION ATTACK**

(71) Applicant: THALES DIS FRANCE SAS, 92190 Meudon (FR)
(72) Inventor: TEGLIA, Yannick, 13720 BELCODENE (FR); COULON, Jean Roch, 13100 LE THOLONET (FR); SINTZOFF, André, 13011 MARSEILLE (FR)
(74) Representative: Bricks, Amélie

(57) **Abstract**

The invention provides a method of detecting a fault injection attack during execution of a computer program comprising:
- obtaining (201) a current value of an address register of a processor during a current clock cycle;
- obtaining (202) a last executed instruction of the computer program, the last executed instruction being obtained during one of several clock cycles before the current clock cycle;
- verifying (205) at least one predefined pair of conditions, each predefined pair of condition comprising a first condition related to the current value of the at least one address register and a second condition related to the last executed instruction of the computer program or to an external signal indicating an interrupt;
- depending on the verification of the at least one predefined pair of conditions, detecting (210) a fault injection attack or validating (206) the last executed instruction.

## Description

This invention is related to the field of computer science, and more particularly, to the security of code flow execution. It is advantageous to prevent attacks using physical fault injection.

Fault injection is a type of active physical attack, which is performed on the source code of a computer program at compile time (attack known as "compile-time fault injection"), or at runtime, during execution of the compiled computer program by a processor of a device (attack known as "runtime fault injection").

It can be implemented by an attacker for malicious purposes, for example to extract cryptographic keys, to by-pass checking routines, to fault execution of neural networks implementation, etc.

For example, considering runtime fault injection to extract cryptographic keys, the attacker injects a fault during the computer program execution, and then, based on an analysis method, they utilize the information from the faulted execution to derive information about a secret key.

Fault injection may be based on the following technologies: electromagnetic pulses, lasers, row hammer attacks, voltage or clock glitching, etc.

Many types of fault injections are known, such as bit flips, bit set/reset, random byte, instruction skip, etc.

A preferred target of runtime fault injection attacks is the Program Counter, PC, also called instruction pointer, which is an address register of the processor storing an address indicating a location, in a memory, of the last executed instruction of a computer program, or indicating the position the next instruction of a computer program to be executed according to the code flow.

Another target may be a stack pointer of a processor, which is also an address register of the processor storing an address indicating a location, in a stack of the main memory, in which the processor can push data, or indicating a location, from which the processor can pop data (or retrieve data).

To ensure the integrity of the code flow during execution of a computer program, and therefore to protect a computer system against runtime fault injection attacks, several methods are known.

A known method is spatial redundancy, which consists in keeping several copies of the PC, and checking the equality of the different copies. However, such a solution is costly and occupy more silicon area, which impacts the size of the chip comprising the processor, or which requires a separate chip for storing the copies of the PC.

Another known method consists in using Error Correcting Codes, ECC, so that errors in the code flow are detected and corrected up to the limits of the correcting code. However, these solutions are complex (involves a lot of computational resources), costly and occupy also more silicon area when implemented on a chip comprising the processor.

Another known method is based on detectors/sensors, such as a laser detector, which is arranged to directly detect the physical injection of fault. However, such solution is costly and very bulky as it requires to add a detector is a constrained environment such as a computer system.

Another known method is based on calculating a cumulative signature of the code flow and comparing the cumulative signature with an expected one. However, this method requires a dedicated processing unit for the signature calculation and involves many logical signals to be exchanged.

Another known method is based on a prediction of the operation (opcode) of the next decoded instruction of a computer program. The prediction is then compared with the opcode of the decoded instruction, and an attack may be detected in case of discrepancy between the predicted opcode and the real one. However, such a prediction implies to have a dedicated prediction unit and to duplicate the processing of the instructions performed by the processor.

There is therefore a need to detect a fault injection attack during the execution of a computer program, without the need to duplicate the operations performed by the processor, while minimizing the required computational and hardware resources dedicated to the attack detection.

The invention aims at improving the situation.

A first aspect of the invention concerns a method of detecting a fault injection attack during execution of a computer program, said computer program comprising a list of instructions, the method being carried out by a monitoring module of a processor, said processor comprising at least one address register storing a value pointing to an address in a memory, the method comprising the following steps:
- obtaining a current value of the at least one address register during a current clock cycle;
- obtaining a last executed instruction of the computer program, the last executed instruction being obtained during one or several clock cycles before the current clock cycle;
- verifying at least one predefined pair of conditions, each predefined pair of condition comprising a first condition related to the current value of the at least one address register and a second condition related to the last executed instruction of the computer program or to an external signal indicating an interrupt;
- depending on the verification of the at least one predefined pair of conditions, detecting a fault injection attack or validating the last executed instruction.

Therefore, the invention enables to detect some runtime fault injection attacks, without the need to duplicate the execution of the computer program, and based on predefined conditions, which may be applied to values that are available in the processor (the last executed instruction, the current value of the at least one address register and an interrupt signal). The computational resources required for verifying predetermined conditions applied to available data is low, and the hardware resources are also low as it requires storage of a value and an executed instruction, or a signal, only.

According to some embodiments, when both conditions are met for a pair of conditions among the at least one predefined pair of conditions, the last executed instruction may be validated.

Therefore, each pair of conditions identifies a valid situation that is defined by the register value and by the last executed instruction of the computed program or by an external signal indicating an interrupt. The at least one pair of conditions may therefore be a list of all the valid situations that can be observed during the execution of the computer program.

In complement, if, for each pair of conditions among the at least one predefined pair of conditions, at least one of the conditions is not met, then a fault injection attack may be detected.

Therefore, if the current situation does not correspond to one of the predefined valid situations (corresponding to the pairs of conditions), then a fault injection attack is detected. This allows to exclude any situation that is not corresponding to a predefined valid situation.

Alternatively, if, for one of the at least one predefined pair of conditions, one of the conditions is met while the other condition is not met, then a fault injection attack may be detected.

In this alternative, an attack is detected only if the current situation is contradicting a predefined situation (the register value is inconsistent with the last executed instruction). This enables to avoid false positives in detections of fault injection attacks.

According to some embodiments, for at least one of the pair of conditions, the second condition may be that the last executed instruction indicates an operation comprised in a predefined set of at least one operation.

Therefore, a predefined set of at least one operation can be defined for some of the possible values/sets of values of the address register. This makes the verification of the conditions by the monitoring module fast and without involving many computational resources.

According to some embodiments, the at least one address register may comprise a program counter pointing to an address of the memory storing the computer program.

The invention can therefore be applied to detect fault injection attacks targeting the program counter, which are prevalent and which can cause severe problems of security during the execution of the computer program.

In complement, the at least one predefined pair of conditions may comprise one or several of the following pairs of conditions:
- according to a first pair of conditions, the first condition is met if the value of the program counter is equal to the value of the program counter for the preceding clock cycle plus a predefined offset, and the second condition is met if the last executed instruction indicates an operation from a predefined first set of operations;
- according to a second pair of conditions, the first condition is met if the value of the program counter is equal to an address indicated as the destination in the last executed instruction, to an address indicated in a register, or to the value of the program counter for the preceding clock cycle plus an offset defined by the last executed instruction, and the second condition is met if the last executed instruction indicates an operation from a predefined second set of operations;
- according to a third pair of conditions, the first condition is met if the value of the program counter is an address of an interrupt or exception handler and the second condition is met if the last executed instruction is an interrupt or raises an exception or if an external signal indicating an interrupt is received by the monitoring module .

These pairs of conditions advantageously identify the valid situations that are defined based on the value of the program counter.

In complement, the monitoring module may sequentially verify the first, second and third pairs of conditions in a given order, until the last executed instruction is validated or a fault injection attack is detected.

This enables to spare computational resources used by the monitoring module.

Still in complement, the predefined first set of operations may comprise one or several of an add operation, a move operation, a push operation, and a pop operation.

Indeed, for these operations, the code flow is linear so that the difference between two consecutive values of the program counter is either equal to a predetermined offset or belonging to a predetermined set formed by several predetermined offsets. Indeed, the difference between two consecutive values depends on the instruction length. According to some Instruction Set Architectures, ISAs, one or two lengths may be predefined, but for other ISAs, there are a lot of possible lengths, for example from 1 byte up to 15 bytes.

Still in complement, the predefined second set of operations may comprise one or several of a call operation, a return operation and a jump operation.

Indeed, these operations are breaking the linear code flow, so that the value of the program counter is defined by the address of the operand of these operations.

According to some embodiments, the at least one address registry may comprise a stack pointer pointing to an address of a stack of the memory.

The invention can therefore be applied to detect fault injection attacks targeting the stack pointer, which are prevalent and which can cause severe problems of security during the execution of the computer program

In complement the at least one predefined pair of conditions may comprise one of or both the following predefined pairs of conditions:
- according to a first pair of condition, a first condition is met if the current value of the stack pointer is different from a value of the stack pointer for the preceding clock cycle, and a second condition is met if the last executed instruction indicates an operation among a predefined set of operations;
- according to a second pair of conditions, a first condition is met if the current value of the stack pointer is identical to a value of the stack pointer for the preceding clock cycle, and a second condition is met if the last executed instruction indicates an operation that does not belong to the predefined set of operations.

These pairs of conditions advantageously identify the valid situations that are defined based on the value of the stack pointer.

In complement, the predefined set of operations may comprise one or several of a push operation, a pop operation, a call operation, an add operation, a sub operation, a return operation or a predefined operation changing the value of the stack pointer.

Indeed, the operations push, pop and call are those for which the stack pointer is modified for certain ISAs. For other ISA, add, sub and/or return operations are those for which the stack pointer is modified.

A second aspect of the invention concerns a processor configured to execute a computer program comprising a list of instructions, the processor comprising:
at least one address register storing a value pointing to an address in a memory coupled with the processor; and
a monitoring module configured for:
   - obtaining a current value of the at least one address register during a current clock cycle;
   - obtaining a last executed instruction of the computer program, the last executed instruction being obtained during one or several clock cycles before the current clock cycle;
   - verifying at least one predefined pair of conditions, each predefined pair of condition comprising a first condition related to the current value of the at least one address register and a second condition related to the last executed instruction of the computer program or to an external signal indicating an interrupt;
   - depending on the verification of the at least one predefined pair of conditions, detecting a fault injection attack or validating the last executed instruction.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### BRIEF DESCRIPTION OF THE DRAWINGS:

[Fig. 1] shows a device according to some embodiments of the invention;
[Fig. 2] shows the steps of a method of detecting a fault injection attack, according to some embodiments of the invention;
[Fig. 3] shows some modules of a processor, including a monitoring module according to a first embodiment of the invention.

### DETAILED DESCRIPTION

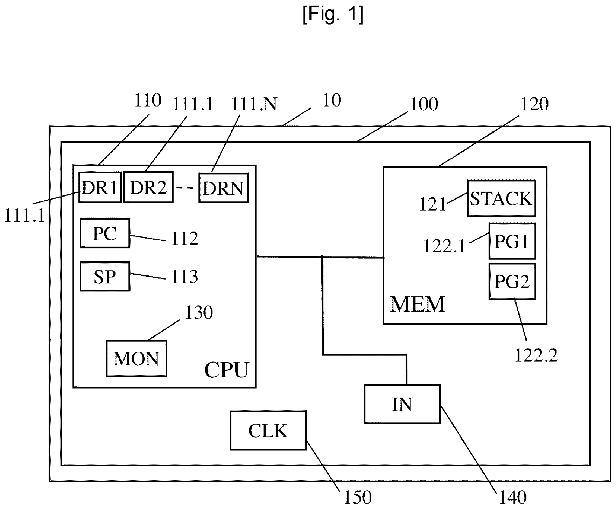

Figure 1 shows a device 10 comprising a computer system integrated in a chip 100, which can be a System on Chip, SoC.

No restriction is attached to the device 10, which can be a desktop computer, laptop, a server, a smartphone, a touchpad, etc.

The SoC 100 comprises a processor 110, a memory 120, one or several interfaces 140, a clock 150, these components being connected to via at least one bus. Alternatively, the clock 150 may be an internal clock of the processor 100.

No restriction is attached to the architecture of the SoC 100 and of the processor 110. The processor 110 can be a RISC-V processor for example, which is a load-store type architecture.

The processor 110 can be a Central Processing Unit, CPU of the device 10.

The memory 120 may comprise one or several types of memory such as RAM, ROM, EEPROM and/or flash memory.

The memory 120 may further comprise a stack 121, which is a reserved portion of memory 120 for temporary storage of registers of the processor 100, which are described hereafter. According to some ISA, the stack 121 is a last in first out portion of memory 120.

The memory 120 may further store at least one computer program 122.1. As illustrated on figure 1, the memory 120 may comprise a plurality of computer programs, comprising at least a first computer program 122.1 and a second computer program 122.2.

Each of the computer programs 122.1 and 122.2 comprises a list of instructions, which can be executed by the processor 100. No restriction is attached to the programming language of the computer programs 122.1 and 122.2. Computer programs 122.1 and 122.2 can designate the executable composed of instructions.

The processor 110 is configured to execute a computer program, such as the first computer program 122.1, by executing the instructions of the computer program 122.1, according to a code flow.

To this end, the processor 110 comprises a plurality of registers, including N data registers 111.1, 111.2 to 111. N, arranged for temporary storing data, according to a predefined format, such as a predefined number of bits, during the execution of the first computer program 122.1, the stored data being the operands of the instructions executed by the processor 110.

The predefined number of bits of the data registers 111.1 to 111.N depends on the type of the processor 100.

The plurality of registers of the processor 110 also comprises address registers, including specific address registers such as:
- a Program Counter, PC, 112, also called instruction pointer, which is an address register of the processor storing a value indicating an address in the memory 120, in particular in the section of the memory 120 storing the first computer program 122.1, of the last executed instruction of the computer program 122.1 (in the example where the first computer program 122.1 is executed by the processor 110), or indicating the position the next instruction of the first computer program 122.1 to be executed according to the code flow;
- a stack pointer 113, which is also an address register of the processor 110 storing an address indicating a location, in the stack 121 of the memory 120, in which the processor 110 can push data from the data registers 111.1-111.N, or indicating a location, from which the processor can pop data (or retrieve data), during the execution of the first computer program 122.1. Every time the processor 110 adds a register value to the stack (push operation), the stack pointer 113 is incremented or decremented, depending on the stack structure, so as to keep track of the last item added to the stack 121 or to the next location where data can be pushed by the processor 110.

Therefore, the program counter 112 and the stack pointer 113 are both address registers of the processor 100 pointing to an address in the memory 120, the value of the address registers being updated during the execution of the instructions of the first computer program 122.1.

According to architectures according to some embodiments of the invention, the memory 120 does not comprise the stack 121 and the processor 110 does not comprise the stack pointer 113.

The processor 100 further comprises a monitoring module 130 according to the invention, which is detailed hereafter. The monitoring module 130 is configured to detect a fault injection attack, by monitoring the value of the PC 112 and/or the value of the stack pointer 113, and the last instruction of the first computer program 122.1 that has been executed by the processor 110 (whether it has been normally executed or raised an exception) or by detecting an external signal indicating an interrupt, based on the verification of at least one predefined pair of conditions. For each pair of conditions, a first condition is related to the value of the PC 112 and a second condition is related to the last executed instruction or an external signal indicating an interrupt.

As previously explained, each of the first and second computer programs 122.1 and 122.2 comprises a list of instructions. The list of instructions defines a code flow, which is a sequence of executions of individual instructions. The code flow depends on the instructions of the computer program (the opcode) and on the data (the operands) to which the computer program is applied.

Some instructions of a computer program are based on an operation such as add, move, push, pop, for which the code flux is following a linear flow. These operations form a predefined first set of operations. This means that after the execution of an instruction based on an operation of the first set, the code flow goes to the next instruction of the program (the one that is consecutive to the currently executed instruction, in the memory 120). Therefore, the PC 112 is incremented by a predefined offset after the execution of the current instruction. The predefined offset is the length of the instruction window, and depends on the architecture. According to some architectures, several offsets may be predefined when several instruction lengths can be mixed. These several offsets may form a predefined set of values. For example, as previously explained, an instruction may have a length comprised between 1 byte and 15 bytes according to some ISAs.

Some instructions of a computer program, such as branch instructions, correspond to operations which break the linear code flow (for which, the program counter is not incremented by a predefined offset). These instructions are predefined for a given architecture, and may form a predefined second set of operations. For example, the call operation and the return operation may belong the second set. When a branch instruction is executed, the PC 112 is updated:
- with the address of the branch destination, which depends on the address of the operand of the branch instruction; or
- with an address indicated in a register, for example an address indicated in the stack pointer register, in the case for a branch instruction corresponding to a return operation; or
- to the value of the program counter for the preceding clock cycle plus an offset defined by the last executed instruction. For example, the offset may be a jump offset of a jump instruction.

A computer program may also comprise an instruction indicating to interrupt the computer program. For example, the SWI instruction, Software Interrupt, used in ARM processors, can be such an instruction explicitly indicating (on purpose) the interrupt the computer program. Upon execution of such an interrupt operation, the PC 112 is updated with the address of an interrupt handler. In some situations, execution of an instruction may also raise an exception and lead to an interruption of the computer program (without the instruction being explicitly an interrupt operation) and the PC 112 is updated with the address of an interrupt handler or the address of an exception handler, which can be the same of the interrupt handler.

Therefore, the at least one pair of conditions verified by the monitoring module 130 may comprise one or several pairs of conditions (and preferably, all the following pairs of conditions) identifying valid situations during the execution of the instructions of the computer program:
- according to a first pair of conditions, the first condition is met if the value of the PC 112 is equal to the value of the PC 112 for the preceding clock cycle plus a predefined offset, and the second condition is met if the last executed instruction indicates an operation from the first set;
- according to a second pair of conditions, the first condition is met if the last executed instruction is an interrupt or raises an exception, or if an external signal indicating an interrupt is received by the monitoring module 130, and the second condition is met if the value of the PC 112 is the address of the interrupt or exception handler;
- according to a third pair of conditions, the first condition is met if the value of the PC 112 is equal to the address indicated as the destination in the last executed instruction, to an address indicated in a register (such as the stack pointer register in case of a return operation as mentioned above), or to the value of the program counter for the preceding clock cycle plus an offset defined by the last executed instruction (for example, a jump offset indicated in a jump instruction) and the second condition is met if the last executed instruction indicates an operation from the second set.

If one of the predefined pair of conditions is met (meaning that both conditions of the pair are met), then the execution of the instruction (and therefore the code flow) is valid.

Else, a fault injection attack may be detected. Alternatively, the fault injection attack is detected only if, for one pair of conditions, only one of the conditions is met whereas the other is not (which indicates that the value of the PC 112 is inconsistent with the last executed instruction).

According to a first example, the last executed instruction indicates a call operation (from the second set), but the value of the PC 112 is different from the destination of the call operation, then a fault injection attack is detected.

According to a second example, the value of the PC 112 is the address of the interrupt/exception handler but neither the last executed instruction indicates an interrupt or has raised an exception, nor an external signal indicating an interrupt has been received by the monitoring module 130, then a fault injection attack is detected. The external exception signal may be caused by exceptions such as an unaligned memory access or a Memory Management Unit, MMU, page fault.

According to a third example, the last executed instruction indicates an operation from the first set, but the value of the PC 112 is different from the value of the PC 112 for the preceding clock cycle, plus a predetermined offset, then a fault injection attack is detected.

Conversely, according to a fourth example, the value of the PC 112 is equal to the value of the PC 112 for the preceding clock cycle, plus a predetermined offset, but the last executed instruction does not indicate an operation from the first set (for example an operation from the second set or an interrupt), then a fault injection attack is detected.

Preferably, the monitoring module 130, checks all the pairs of conditions sequentially, and stops once a pair of conditions is verified (both conditions of the pair are met and the instruction is valid) or once only one condition of a pair is met (a fault injection attack is detected).

The implementation of the above pairs of conditions enable to detect most of the cases of runtime fault injections attacks targeting the PC 112.

Alternatively, or in complement, the monitoring module 130 may be configured to detect some runtime fault injection attacks targeting the stack pointer 113.

As previously explained, the stack pointer 113 points to the address in the stack 121 of the memory 120, in which the processor 110 can push data from the data registers 111.1-111.N, or points to the address, from which the processor can pop data (or retrieve data), during the execution of the first computer program 122.1.

The value of the stack pointer 113 is therefore modified each time a push operation or a pop operation is performed by the processor 110 in the stack 121. This applies to ISA having the pop and push operations. For others, the value of the stack pointer is modified each time an add or sub operation is performed by the processor 110.

The value of the stack pointer 113 can also be modified when a call operation is executed by the processor 110, the value of the program counter 112 is pushed in the stack 121 and the stack pointer 113 is modified. The value of the stack pointer 113 can also be modified when a return operation is executed by the processor 110. Other predefined operations may be changing the value of the stack pointer, for example an operation aiming at allocating space on the top of the stack 121 for storing data.

Therefore, for a given architecture, the stack pointer 113 is modified only for a predefined fourth set of operations, including for example pop, push and call, add, sub and return.

According to some embodiments corresponding to a first architecture of stack 121, the stack pointer 113 is incremented when data is pushed in the stack 121 (incrementing stack type). In these embodiments, the stack pointer 113 is decremented when the processor 110 pops (or retrieves) data from the stack 121.

According to alternative embodiments corresponding to a second architecture of the stack 121, the stack pointer 113 is decremented when data is pushed (decrementing stack type). In these embodiments, the stack pointer 113 is incremented when the processor 110 pops (or retrieves) data from the stack 121.

Therefore, to detect a fault injection attack targeting the stack pointer 113, the monitoring module 130 may verify the following predefined pairs of conditions, comprising:
- a first pair of conditions comprising a first condition that is met if the stack pointer 113 is incremented or decremented (is modified), and a second condition that is met if the last executed instruction indicates an operation among the fourth set of operations;
- a second pair of condition comprising a first condition that is met if the stack pointer 113 is not modified, and a second condition that is met if the last executed instruction indicates an operation that does not belong to the fourth set of operations.

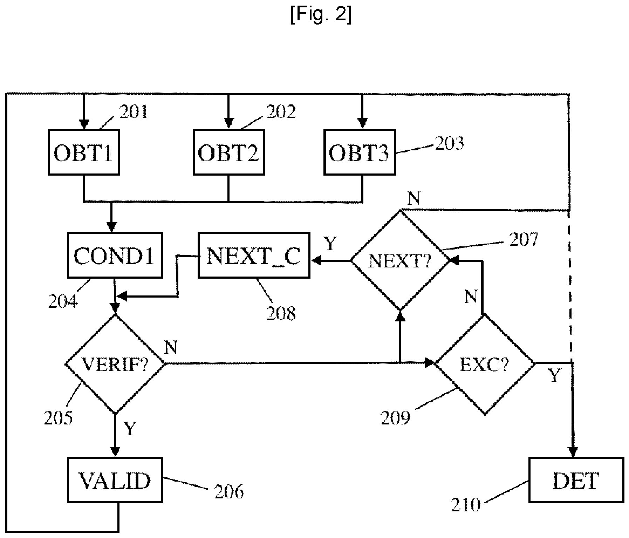

Figure 2 shows the steps of a method for detecting a fault injection attack according to some embodiments of the invention.

The following steps can be carried out at each clock cycle by the monitoring module 130 of the processor 110 according to the invention. Each clock cycle is indexed by i, which is incremented each time a new clock cycle starts.

At step 201, the monitoring module 130 obtains a current value V(i) of a register of the processor 110 pointing to an address of the memory 120. As previously explained, the current value V(i) can be the current value PC(i) of the Program Counter 112, according to a first embodiment, or can be the current value SP(i) of the stack pointer 113, according to a second embodiment. According to a third embodiment, the monitoring module 130 obtains the current value PC(i) of the PC 112 and the current value SP(i) of the stack pointer 113.

At step 202, the monitoring module 130 obtains a current instruction INSTR(i), decoded by the processor 110 during the execution of the first computer program 122.1. It is to be noted that the register value PC(i) and/or SP(i), may be obtained before the current instruction INSTR(i) is decoded, and therefore, before it is executed. Therefore, when the current register value PC(i) and/or SP(i) is obtained, the last executed instruction is the previous instruction executed during one of the clock cycles before the current clock cycle i, for example during clock cycle of index i-1. As explained above, the execution of an instruction may be successful, or may raise an exception signal in some cases. Such an exception signal may be received by the monitoring module 130 upon execution of an instruction.

At step 203, which is optional, an external signal INTER indicating an interruption, for example a hardware interruption, may be received by the monitoring module 130. Step 203 can be anytime during the clock cycle of index i: the external signal INTER can be received before step 201, between steps 201 and 202, or after step 202 and before step 204 described hereafter. This is because the external signal INTER is independent (asynchronous) from the execution of the first computer program 121.1.

At step 204, which is carried out after steps 201, 202 and 203 (if INTER is received), the monitoring module 130 retrieves a predefined first pair of conditions, among at least one predefined pair of conditions. As explained above, each predefined pair of conditions comprises a first condition related to a current register value (CP(i) or SP(i)) and a second condition related to the last executed instruction, which can be INSTR(i-1) or to the external signal INTER. As previously explained, the at least one predefined pair of conditions is predefined and the monitoring module 130 is configured to verify each predefined pair of conditions of the at least one predefined pair of conditions.

At step 205, the monitoring module 130 verifies if both first and second conditions of the first predefined pair of conditions, are met.

If so (if both the first and second conditions are met), the last executed instruction INSTR(i-1) is considered as valid.

If not, the monitoring module 130 goes to step 207 or to step 209, according to the embodiment. In the embodiments where a fault injection attack is explicitly detected, step 209 is implemented after step 205. In alternative embodiments, a fault injection attack is detected if none of the at least one pair of conditions is verified, and step 205 is followed by step 207.

At step 207, the monitoring module 207 determines if there is at least one predefined pair of conditions for which step 205 has not been performed yet, during the clock cycle of index i.

If so (if at least one predefined pair of conditions has not been verified according to step 205 yet), a next predefined pair of conditions is retrieved by the monitoring module 130 among the at least one predefined pair of conditions, which has not been verified according to step 205 yet. The method then goes back to step 205, which has been previously described.

Else, if every predefined pair of conditions among the at least one predefined pair of conditions has been verified during step 205, then the method goes back to steps 201 to 203 which are carried out for the next clock cycle i+1. Also, in some embodiments (the embodiments for which step 209 is not performed), a fault injection attack is detected at step 210, because for none of the at least one predefined pair of conditions, both conditions are met.

At step 209 (in the embodiments in which step 209 is performed), the monitoring module 130 determines if one of the conditions of the predefined pair is met, while the other condition is not met. If so (only one of the conditions of the predefined pair is met), a fault injection attack is detected at step 210. Else, the method goes to step 207, to determine whether there is at least one remaining predefined pair of conditions to be verified.

The detection of a fault injection attack at step 210 may comprise the interruption of the execution of the first computer program 121.1 and/or transmission of an alert to an external entity, for example via the interface 140 described on figure 1.

In the first embodiment, the at least one pair of conditions comprises one or several of the three predefined pairs of conditions (and preferably the three pairs of conditions) described above for detecting a fault injection attack targeting the PC 112.

In the second embodiment, the at least one pair of conditions comprises one or several of the two predefined pairs of conditions described above for detecting a fault injection attack targeting the stack pointer 113.

In the third embodiment, the at least one pair of conditions comprises one or several of the three predefined pairs of conditions (and preferably the three pairs of conditions) described above for detecting a fault injection attack targeting the PC 112, and one or several of the two predefined pairs of conditions described above for detecting a fault injection attack targeting the stack pointer 113.

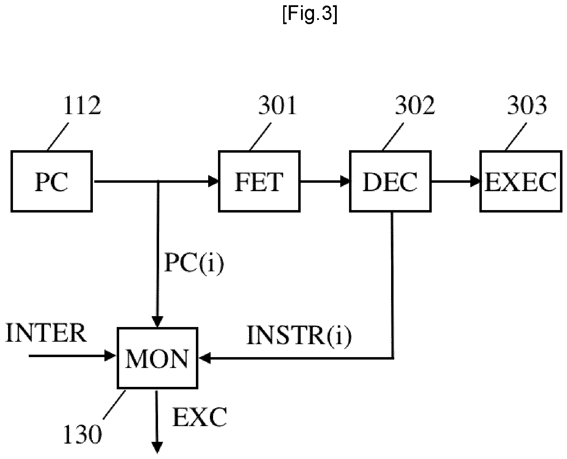

Figure 3 shows some modules of a processor 110 according to the first embodiment of the invention.

In addition to the components described when referring to figure 1, the processor 110 comprises:
- a fetching module 301, configured to fetch an instruction from the first computer program based on the address indicated by the current value PC(i) of the PC 112;
- a decoding module 302, configured to decode the instruction fetched by the fetching module 301, to obtain the current instruction INSTR(i);
- an execution module 303, configured to execute the instruction INSTR(i) decoded by the decoding module 302.

These modules are well known and are not further described in the present description.

As shown on figure 3, the monitoring module 130 is arranged to obtain, at step 201, the current address register value PC(i) from the PC 112, for example when it is transmitted to the fetching module 301. Also, the monitoring module 130 is arranged to obtain, at step 302, the decoded current instruction INSTR(i) from the decoding module 302.

In addition, the monitoring module 130 may receive the external signal indicating an exception from a module that is not shown on figure 3, which can be internal to the processor 110 or which can be external to the processor 110.

By verifying the at least one pair of conditions as previously described, the monitoring module 130 is configured to detect a fault injection attack and to issue an alert at step 210.

In the second embodiment, the current instruction INSTR(i) may also be received from the decoding module 302, as shown on figure 3. The current register value SP(i) may be obtained by the monitoring module 130 at the beginning of the clock cycle of index i, by interrogating the stack pointer 113.

The example embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method of detecting a fault injection attack during execution of a computer program (122.1; 122.2), said computer program comprising a list of instructions, the method being carried out by a monitoring module (130) of a processor (110), said processor comprising at least one address register (112; 113) storing a value pointing to an address in a memory (120), the method comprising the following steps:
- obtaining (201) a current value of the at least one address register during a current clock cycle;
- obtaining (202) a last executed instruction of the computer program, the last executed instruction being obtained during one or several clock cycles before the current clock cycle;
- verifying (205) at least one predefined pair of conditions, each predefined pair of conditions comprising a first condition related to the current value of the at least one address register and a second condition related to the last executed instruction of the computer program or to an external signal indicating an interrupt;
- depending on the verification of the at least one predefined pair of conditions, detecting (210) a fault injection attack or validating (206) the last executed instruction.

2. The method according to claim 1, wherein, when both conditions are met for a pair of conditions among the at least one predefined pair of conditions, the last executed instruction is validated (206).

3. The method according to claim 2, wherein if, for each pair of conditions among the at least one predefined pair of conditions, at least one of the conditions is not met, then a fault injection attack is detected (210).

4. The method according to claim 2, wherein if, for one of the at least one predefined pair of conditions, one of the conditions is met while the other condition is not met, then a fault injection attack is detected (210).

5. The method according to one of the preceding claims, wherein, for at least one of the pair of conditions, the second condition is that the last executed instruction indicates an operation comprised in a predefined set of at least one operation.

6. The method according to one of the preceding claims, wherein the at least one address register comprises a program counter (112) pointing to an address of the memory (120) storing the computer program (122.1; 122.2).

7. The method according to claim 6, wherein the at least one predefined pair of conditions comprises one or several of the following pairs of conditions:
- according to a first pair of conditions, the first condition is met if the value of the program counter (112) is equal to the value of the program counter for the preceding clock cycle plus a predefined offset, and the second condition is met if the last executed instruction indicates an operation from a predefined first set of operations;
- according to a second pair of conditions, the first condition is met if the value of the program counter is equal to an address indicated as the destination in the last executed instruction, to an address indicated in a register, or to the value of the program counter for the preceding clock cycle plus an offset defined by the last executed instruction, and the second condition is met if the last executed instruction indicates an operation from a predefined second set of operations;
- according to a third pair of conditions, the first condition is met if the value of the program counter is an address of an interrupt or exception handler and the second condition is met if the last executed instruction is an interrupt or raises an exception, or if an external signal indicating an interrupt is received by the monitoring module.

8. The method according to claim 7, wherein the monitoring module (130) sequentially verifies (205) the first, second and third pairs of conditions in a given order, until the last executed instruction is validated (206) or a fault injection attack is detected (210).

9. The method according to claims 7 or 8, wherein the predefined first set of operations comprises one or several of an add operation, a move operation, a push operation, and a pop operation.

10. The method according to one of claims 7 to 9, wherein the predefined second set of operations comprises one or several of a call operation, a return operation and a jump operation.

11. The method according to one of the preceding claims, wherein the at least one address registry comprises a stack pointer (113) pointing to an address of a stack (121) of the memory (120).

12. The method according to claim 11, wherein the at least one predefined pair of conditions comprises one of or both the following predefined pairs of conditions:
- according to a first pair of condition, a first condition is met if the current value of the stack pointer (113) is different from a value of the stack pointer for the preceding clock cycle, and a second condition is met if the last executed instruction indicates an operation among a predefined set of operations;
- according to a second pair of conditions, a first condition is met if the current value of the stack pointer is identical to a value of the stack pointer for the preceding clock cycle, and a second condition is met if the last executed instruction indicates an operation that does not belong to the predefined set of operations.

13. The method according to claim 12, wherein the predefined set of operations comprises one or several of a push operation, a pop operation, a call operation, an add operation, a sub operation, a return operation or a predefined operation changing the value of the stack pointer.

14. A processor (110) configured to execute a computer program (122.1; 122.2) comprising a list of instructions, the processor comprising:
at least one address register (112; 113) storing a value pointing to an address in a memory (120) coupled with the processor; and
a monitoring module (130) configured for:
- obtaining a current value of the at least one address register during a current clock cycle;
- obtaining a last executed instruction of the computer program, the last executed instruction being obtained during one or several clock cycles before the current clock cycle;
- verifying at least one predefined pair of conditions, each predefined pair of condition comprising a first condition related to the current value of the at least one address register and a second condition related to the last executed instruction of the computer program or to an external signal indicating an interrupt;
- depending on the verification of the at least one predefined pair of conditions, detecting a fault injection attack or validating the last executed instruction.
